# EUROPÄISCHE PATENTSCHRIFT

(11) **EP 4 172 662 B1**
(45) Veröffentlichungstag und Bekanntmachung des Hinweises auf die Patenterteilung: **05.08.2026**
(21) Anmeldenummer: 21735608.8
(22) Anmeldetag: 17.06.2021
(51) Int. Cl.: G01V 3/17

(54) **VERFAHREN ZUM BETRIEB EINES MATERIALUNTERSUCHUNGSGERÄTS UND DERARTIGES MATERIALUNTERSUCHUNGSGERÄT**
METHOD FOR USING A MATERIAL DETECTION DEVICE AND CORRESPONDING DEVICE
PROCÉDÉ POUR L'UTILISATION D'UN DISPOSITIF DE DETECTION DE MATERIAUX ET DISPOSITIF CORRESPONDANT

(30) Priorität: 30.06.2020 DE 102020208116
(43) Veröffentlichungstag der Anmeldung: 03.05.2023
(73) Patentinhaber: Robert Bosch GmbH, 70442 Stuttgart (DE)
(72) Erfinder: SGARZ, Heiko, 71229 Leonberg (DE); BROSI, Jan-Michael, 70771 Leinfelden-Echterdingen (DE); HAGMAYER, Sandra, 73765 Neuhausen (DE); TRACK, Torsten, Pulau Pinang, 11700 (MY); LENK, Ina Sophie, 72226 Simmersfeld (DE)
(86) Internationale Anmeldenummer: PCT/EP2021/066352
(87) Internationale Veröffentlichungsnummer: WO 2022/002605

(56) Entgegenhaltungen:
- DE-A1- 102011 079 258
- US-A1- 2013 321 621
- US-A1- 2016 103 215
- US-B1- 6 609 451

## Beschreibung

### Stand der Technik

Aus WO 2015/197790 A2 ist bereits ein Verfahren zum Betrieb eines, insbesondere handhaltbaren, Materialuntersuchungsgeräts und ein derartiges Materialuntersuchungsgerät bekannt, bei welchem ein Messsignal in ein Untersuchungsobjekt ausgesandt wird, bei welchem eine Position des Materialuntersuchungsgeräts relativ zu einer Oberfläche des Untersuchungsobjekts erfasst wird, um eine Materialeigenschaft einer hinter der Oberfläche verborgenen Region des Untersuchungsobjekts ortsaufgelöst und/oder richtungsaufgelöst zu ermitteln, und bei dem die Materialeigenschaft als zumindest ein digitales Anzeigeobjekt mittels einer physischen Anzeigeeinheit dargestellt wird.

US 2013/321621 A1 offenbart ein elektrisches Gerät mit einem Bildsensor zur Erfassung von Bildern einer Oberfläche einer Struktur.

In der DE 10 2011 079258 A1 wird ein Verfahren und eine Vorrichtung zum Detektieren eines Objektes in einem Untergrund beschrieben.

Aus der US 2016/103215 A1 ist eine Ortungsvorrichtung bekannt, die auf einer Oberfläche einsetzbar ist.

US 6 609 451 B1 beschreibt einen Minendetektor, um Landminen zu detektieren.

### Offenbarung der Erfindung

Die Erfindung geht aus von einem Verfahren zum Betrieb eines, insbesondere handhaltbaren, Materialuntersuchungsgeräts, bei welchem ein Messsignal in ein Untersuchungsobjekt ausgesandt wird, bei welchem eine Position des Materialuntersuchungsgeräts relativ zu einer Oberfläche des Untersuchungsobjekts erfasst wird, um eine Materialeigenschaft einer hinter der Oberfläche verborgenen Region des Untersuchungsobjekts ortsaufgelöst und/oder richtungsaufgelöst zu ermitteln, und bei dem die Materialeigenschaft als zumindest ein digitales Anzeigeobjekt mittels einer physischen Anzeigeeinheit dargestellt wird.

Es wird vorgeschlagen, dass in zumindest einem Verfahrensschritt dasselbe Anzeigeobjekt zusätzlich zu der Materialeigenschaft eine Messzusatzinformation, insbesondere mittels farblicher Codierung, darstellt. Das Materialuntersuchungsgerät umfasst vorzugsweise eine Sensoreinheit, insbesondere eine Antenneneinheit, welche als Messsignale elektromagnetische Wellen, insbesondere im Mikrowellenbereich und/oder im Radiowellenbereich, aussendet und empfängt. Insbesondere ist die Sensoreinheit dazu vorgesehen, einen zurückgestreuten, insbesondere zurückreflektierten, Anteil der ausgesandten Messsignale zu empfangen. Das Materialuntersuchungsgerät ist insbesondere dazu vorgesehen, zu einer Erfassung der Materialeigenschaft, insbesondere von einem Benutzer, an der Oberfläche des Untersuchungsobjekts angeordnet zu werden und optional relativ zu der Oberfläche verschoben zu werden, insbesondere unter Beibehaltung eines Kontakts des Materialuntersuchungsgeräts mit der Oberfläche. Vorzugsweise umfasst das Materialuntersuchungsgerät zumindest ein Wälzelement, insbesondere ein Rad, eine Walze, eine Kugel o. dgl., zu einer Anordnung des Materialuntersuchungsgeräts an der Oberfläche und/oder zu einer Bewegung des Materialuntersuchungsgeräts relativ zur Oberfläche. Das Materialuntersuchungsgerät umfasst vorzugsweise zumindest eine Positionserfassungseinheit, insbesondere ein Odometer, welche die Position des Materialuntersuchungsgeräts relativ zu der Oberfläche, insbesondere eine Verschiebung relativ zu einer Startposition, erfasst, insbesondere durch eine Erfassung eines Abwälzens des Wälzelements an der Oberfläche. Das Materialuntersuchungsgerät umfasst insbesondere zumindest eine Steuereinheit, welche die von der Sensoreinheit erfasste Materialeigenschaft auswertet, davon abhängig ein Anzeigeobjekt erstellt und an die Anzeigeeinheit zu einer Ausgabe übermittelt. Das Materialuntersuchungsgerät umfasst vorzugsweise zumindest eine Speichereinheit. Die Speichereinheit ist vorzugsweise als wiederbeschreibbarer Speicher, wie beispielsweise als Festwertspeicher (ROM), als Electrically Erasable Programmable Read-Only Memory (EEPROM), als Flash-Speicher (Flash-EEPROM) o. dgl., ausgebildet. Insbesondere speichert die Steuereinheit auf der Speichereinheit die Materialeigenschaft, insbesondere als Rohdaten und/oder in einer ausgewerteten Form, in Verknüpfung mit Positionsdaten des Materialuntersuchungsgeräts, welche bei einer Erfassung des zu speichernden Werts der Materialeigenschaft von der Positionserfassungseinheit erfasst werden.

Die Sensoreinheit erfasst als Materialeigenschaft insbesondere ein Streuverhalten, Reflexionsverhalten, Transmissionsverhalten und/oder Absorptionsverhalten des Untersuchungsobjekts bezüglich des Messsignals. Insbesondere ermittelt die Steuereinheit räumliche Variationen in der Materialeigenschaft. Vorzugsweise ist die Steuereinheit zu einer Untersuchung von Untersuchungsobjekten mit einem räumlich homogenen Grundmaterial, beispielsweise aus Beton, Massivholz, Pressspan, Gipskarton, Keramik, Kunststoff oder einem anderen Konstruktionswerkstoff vorgesehen. Insbesondere schließt die Steuereinheit aus einer Variation der Materialeigenschaft auf Einlagerungen, beispielsweise Wasser, und/oder Fremdkörper, beispielsweise Schrauben, Stromleitungen, Stahlträger, Wasserleitungen, Lufteinschlüsse o. dgl., in dem Grundmaterial des Untersuchungsobjekts. Unter einem "homogenen Grundmaterial" soll insbesondere ein Material verstanden werden, bei welchem räumliche Unterschiede in der Materialeigenschaft geringer sind als ein Unterschied zwischen Grundmaterial und Fremdkörper oder geringer als ein räumlicher Unterschied aufgrund einer ortsabhängigen Einlagerung, insbesondere Feuchte. Vorzugsweise umfasst das Verfahren einen Kalibrierungsschritt, bei welchem mittels einer Messung mit der Sensoreinheit ein Mittelwert der Materialeigenschaft des Grundmaterials als Referenz zu einer Unterscheidung zwischen Grundmaterial und Einlagerung und/oder Fremdkörper erfasst wird. Alternativ oder zusätzlich sind auf einem Speicher der Steuereinheit und/oder in der Speichereinheit Kalibrierungsdaten zu verschiedenen Grundmaterialien hinterlegt, welche insbesondere als Referenz zu einer Unterscheidung zwischen Grundmaterial und Einlagerung und/oder Fremdkörper von der Steuereinheit abgerufen werden. Insbesondere ist das Materialuntersuchungsgerät zu einer Ortung von Fremdkörpern und/oder zu einer Erfassung eines räumlichen Verlaufs einer Einlagerung in dem Grundmaterial des Untersuchungsobjekts vorgesehen.

Unter einer "Steuereinheit" soll insbesondere eine Einheit mit zumindest einer Steuerelektronik verstanden werden. Unter einer "Steuerelektronik" soll insbesondere eine Einheit mit einer Prozessoreinheit und mit einem Speicher sowie mit einem in dem Speicher gespeicherten Betriebsprogramm verstanden werden. Die Anzeigeeinheit umfasst zumindest ein Display, besonders bevorzugt ein Farbdisplay, insbesondere mit einer Auflösung von zumindest 50x50 Pixeln, bevorzugt von mehr als 100x100 Pixeln, besonders bevorzugt von mehr als 200x200 Pixeln.

Beispielsweise ist das Display als Flüssigkristalldisplay (LCD), als Leuchtdiodendisplay (LED-Display), als organisches Leuchtdiodendisplay (OLED-Display), als Plasmabildschirm (PDP) o. dgl. ausgebildet. Optional umfasst die Anzeigeeinheit Anzeigebedienelemente zu einer Änderung einer Anzeigeeinstellung, insbesondere Helligkeit, Kontrast, Farbsättigung o. dgl., des Displays und/oder zumindest ein weiteres Anzeigeelement, insbesondere eine Kontrollleuchte. Unter "vorgesehen" soll insbesondere speziell eingerichtet, speziell programmiert, speziell ausgelegt und/oder speziell ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt.

Unter einem "Anzeigeobjekt" soll insbesondere eine mittels der Anzeigeeinheit dargestellte Repräsentation eines, insbesondere einzelnen, an einer Untersuchung des Untersuchungsobjekts mittels des Materialuntersuchungsgeräts beteiligten physischen Objekts oder eines, insbesondere einzelnen, gedachten Objekts verstanden werden. Von Anzeigeobjekten repräsentierte physische Objekte umfassen insbesondere das Untersuchungsobjekt, die Oberfläche des Untersuchungsobjekts, eine Teilregion des Untersuchungsobjekts, im Speziellen einen Fremdkörper und/oder eine Einlagerung in dem Grundmaterial des Untersuchungsobjekts, und/oder das Materialuntersuchungsgerät. Beispiele für ein durch das Anzeigeobjekt repräsentiertes gedachtes Objekt sind eine Skala, insbesondere eine Positionsangabe oder ein Wertebereich der Materialeigenschaft, eine Informationsbox, ein Sensorbereich des Materialuntersuchungsobjekts o. dgl. Unter einem "einzelnen" physischen Objekt soll hierbei insbesondere unter Berücksichtigung des Auflösungsvermögens der Sensoreinheit als von dem Materialuntersuchungsgerät ein als einzeln auflösbares physisches Objekt verstanden werden. Insbesondere können mehrere physische Objekte, die im Sinne des Auflösungsvermögens nah beieinander liegen, und/oder einen ähnlichen Wert der Materialeigenschaft aufweisen, von der Steuereinheit zu einem einzelnen Anzeigeobjekt zusammengefasst werden. Ein "angezeigtes" physisches oder gedachtes Objekt steht im Weiteren insbesondere als Kurzform für ein Anzeigeobjekt, welches dieses physische oder gedachte Objekt repräsentiert. Vorzugsweise erstellt und verwaltet die Steuereinheit das Anzeigeobjekt, insbesondere aktualisiert, aktiviert oder deaktiviert die Steuereinheit ein Anzeigen des Anzeigeobjekts.

Die Anzeigeeinheit ordnet vorzugsweise dem Anzeigeobjekt abhängig von einem Steuersignal der Steuereinheit Pixel der Anzeigeeinheit zu. Die Anzeigeeinheit gibt vorzugsweise in zumindest einem Verfahrensschritt des Verfahrens eine Anzeige aus. Die Anzeige umfasst bevorzugt zumindest einen Hintergrund und das zumindest eine Anzeigeobjekt, insbesondere einer Vielzahl an Anzeigeobjekten. Verschiedene Anzeigeobjekte können in der Anzeige beabstandet voneinander angeordnet sein oder sich teilweise verdeckend angeordnet sein. Vorzugsweise grenzen sich verschiedene Anzeigeobjekte in der Anzeige durch eine Außenkontur oder unterschiedliche Füllung, insbesondere Farbgebung, voneinander und insbesondere von dem Hintergrund der Anzeige ab. Pixel der Anzeigeeinheit, die die Anzeigeeinheit einem einzelnen Anzeigeobjekt zuordnet, können benachbart oder, insbesondere gruppenweise, beabstandet voneinander angeordnet sein.

Die Steuereinheit erstellt zumindest das eine Anzeigeobjekt in Abhängigkeit von der erfassten Materialeigenschaft. Insbesondere erstellt die Steuereinheit zumindest ein Anzeigeobjekt, das einen Fremdkörper und/oder eine Einlagerung in dem Grundmaterial des Untersuchungsobjekts repräsentiert. Insbesondere stellt das Anzeigeobjekt eine räumliche Erstreckung, Position und/oder Ausrichtung einer Teilregion des Untersuchungsobjekts, insbesondere eines Fremdobjekts, mit einem von der Referenz abweichenden Wert der Materialeigenschaft und/oder einen räumlichen Verlauf der Materialeigenschaft, insbesondere einer Einlagerung, dar. Das Anzeigeobjekt trägt als Information insbesondere einen Wert der Materialeigenschaft, insbesondere eine zumindest binäre oder graduelle Abweichung von der Referenz, und eine zumindest eindimensionale, bevorzugt zweidimensionale, optional dreidimensionale Position relativ zu dem Materialuntersuchungsgerät.

Unter einer "Messzusatzinformation" soll insbesondere eine Information verstanden werden, die aus der erfassten ortsabhängigen Materialeigenschaft abgeleitet wird und/oder eine für die Erfassung der Materialeigenschaft relevante Einstellung der Steuereinheit darstellt. Beispiele für die Messzusatzinformation umfassen eine Materialart eines Fremdkörpers, einen Konfidenzfaktor einer Auswertung des Messsignals, einen Erfassungsmodus der Sensoreinheit, einen Auswertemodus der Steuereinheit o. dgl. Eine Darstellung der Messzusatzinformation mit demselben Anzeigeobjekt, welches auch die Materialeigenschaft darstellt, erfolgt besonders bevorzugt mittels Farbgebung und/oder mittels Graustufen des Anzeigeobjekts. Alternativ oder zusätzlich wird die Messzusatzinformation beispielsweise mittels eines Musters einer Füllung oder Außenkontur des Anzeigeobjekts, mittels Blinkens des Anzeigeobjekts, mittels eines Transparenzgrades des Anzeigeobjekts, mittels eines Helligkeitsgrades des Anzeigeobjekts o. dgl. codiert. Vorzugsweise erstellt die Steuereinheit zumindest ein weiteres Anzeigeobjekt zu einer Auswertung des Anzeigeobjekts, beispielsweise als Skala, Positionsreferenz o. dgl. Optional stellt das weitere Anzeigeobjekt zusätzlich die Messzusatzinformation und/oder eine weitere Messzusatzinformation dar. Optional erstellt die Steuereinheit zumindest ein von einer Erfassung der Materialeigenschaft unabhängiges zusätzliches Anzeigeobjekt, wie beispielsweise eine Ladzustandsanzeige des Materialuntersuchungsgeräts, eine Menüleiste o. dgl.

Durch die erfindungsgemäße Ausgestaltung des Verfahrens kann eine vorteilhaft große Fülle an Informationen dargestellt werden. Insbesondere können auch für außerhalb des aktuellen Sensorbereichs liegende Fremdobjekte Informationen vorteilhaft übersichtlich ausgegeben werden.

Weiter wird vorgeschlagen, dass die Materialeigenschaft und Messzusatzinformation in zumindest zwei Verfahrensschritten in jeweils einer verschiedenen Darstellungsform ausgegeben werden. Vorzugsweise wechseln die Steuereinheit und die Anzeigeeinheit die Darstellungsform bei einer Betätigung eines Bedienelements der Materialuntersuchungsvorrichtung durch einen Benutzer. Beispielsweise wechselt die Steuereinheit und die Recheneinheit zwischen einer Darstellungsform, bei welcher eine Tiefe eines Fremdobjekts des Untersuchungsobjekts dargestellt ist, und einer Darstellungsform, bei welcher eine maximale Bohrtiefe, bei der auf kein Fremdobjekt des Untersuchungsobjekts gestoßen wird, dargestellt ist. Unter einer "Tiefe" soll insbesondere der minimale Abstand einer Teilregion des Untersuchungsobjekts, insbesondere eines Fremdobjekts, von der Oberfläche des Untersuchungsobjekts verstanden werden. Beispielsweise wechseln die Steuereinheit und die Recheneinheit zwischen einer Darstellungsform, welche einen zur Oberfläche des Untersuchungsobjekts senkrechten Schnitt darstellt, und einer Darstellungsform, welche eine zur Oberfläche des Untersuchungsobjekts parallele Draufsicht darstellt. Beispielsweise wechseln die Steuereinheit und die Recheneinheit zwischen einer Darstellungsform, welche einen aktuellen Sensorbereich des Materialuntersuchungsgeräts darstellt, und einer Darstellungsform, welche beruhend auf vorhergehenden Erfassungen der Materialeigenschaft eine über den aktuellen Sensorbereich hinausgehende Panoramaansicht des Untersuchungsobjekts darstellt. Beispielsweise wechselt die Steuereinheit und die Anzeigeeinheit zwischen einer Darstellungsform, bei welcher zumindest zwei räumliche Verläufe der Materialeigenschaft und/oder daraus abgeleiteter Parameter überlagert, insbesondere mit einer gemeinsamen Skala oder einer Doppelskala, dargestellt werden, und einer Darstellungsform, bei welcher die zumindest zwei räumlichen Verläufe beabstandet voneinander, insbesondere mit je einer eigenen Skala und insbesondere ohne Überlapp, dargestellt werden. Beispielsweise wechselt die Steuereinheit und die Anzeigeeinheit zwischen zwei Darstellungsformen, welche unterschiedliche, insbesondere eine logarithmische und eine lineare, Skalierung der Materialeigenschaft darstellen. Durch die erfindungsgemäße Ausgestaltung kann das Materialuntersuchungsgerät vorteilhaft für viele Anwendungsfälle verwendet werden.

Ferner wird vorgeschlagen, dass in zumindest einem Verfahrensschritt eine aktuelle Darstellungsform des Anzeigeobjekts mittels der Messzusatzinformation und/oder einer weiteren Messzusatzinformation kenntlich gemacht wird. Vorzugsweise ist zumindest ein Anzeigeobjekt als Tiefenreferenz ausgebildet. Die Tiefenreferenz umfasst vorzugsweise eine zur angezeigten Oberfläche des Untersuchungsobjekts parallele Linie, welche sich insbesondere zumindest von einem aktuellen angezeigten Erfassungsort bis zu einer angezeigten Tiefenskala erstreckt. Insbesondere einstellungsabhängig und/oder darstellungsformabhängig wird die Tiefenreferenz in einer Tiefe des aktuell erfassten angezeigten Fremdobjekts, in einer Tiefe desjenigen angezeigten Fremdobjekts mit der geringsten ermittelten Tiefe, in einer vom Benutzer vorgegebenen Bohrtiefe und/oder in einer maximalen möglichen Bohrtiefe, insbesondere mit einem Sicherheitsabstand von einem angezeigten Fremdobjekt angezeigt. Die Messzusatzinformation der Tiefenreferenz ist beispielsweise zu einer Unterscheidung zwischen einer Bohrtiefe und einer Tiefe eines angezeigten Fremdobjekts vorgesehen. Beispielsweise wird zur Kenntlichmachung einer Bohrtiefe als Messzusatzinformation ein, insbesondere an der Linie der Tiefenreferenz anliegender, Bohrkopf eingeblendet. Beispielsweise wird zur Kenntlichmachung einer Tiefe eines angezeigten Fremdobjekts der Bohrkopf ausgeblendet. Durch die erfindungsgemäße Ausgestaltung kann eine Handhabung des Materialuntersuchungsgeräts vorteilhaft intuitiv gestaltet werden. Insbesondere können unterschiedliche Darstellungsformen vorteilhaft eindeutig voneinander unterscheidbar gemacht werden.

Weiterhin wird vorgeschlagen, dass in zumindest einem Verfahrensschritt des Verfahrens die Messzusatzinformation eine Materialart codiert. Vorzugsweise ermittelt die Steuereinheit in Abhängigkeit von der räumlichen Variation der Materialeigenschaft die Materialart einer Teilregion des Untersuchungsobjekts, insbesondere eines Fremdobjekts. Beispielsweise unterscheidet die Steuereinheit zwischen magnetischem Metall, nicht-magnetischem Metall, stromführenden Leitern, Nicht-Metallen und übrigen Materialien. Vorzugsweise weisen Anzeigeobjekte, die Fremdobjekte mit unterschiedlichen Materialarten repräsentieren, unterschiedliche Farben, insbesondere unterschiedliche Füllfarben auf. Alternativ weisen die Anzeigeobjekte die gleiche Füllfarbe auf, wobei unterschiedliche Materialarten durch eine farbliche Markierung, beispielsweise ein Punkt, und/oder, insbesondere farbliche, Symbole im Inneren der Anzeigeobjekte codiert werden. Durch die erfindungsgemäße Ausgestaltung können vorteilhaft unterschiedliche Fremdobjekte in dem Grundmaterial des Untersuchungsobjekts unterschiedlich dargestellt werden. Insbesondere können Fremdobjekte außerhalb des aktuellen Sensorbereichs vorteilhaft kenntlich gemacht werden. Insbesondere kann die Anzahl an weiteren Anzeigeobjekten zu einer differenzierten Kenntlichmachung von Fremdobjekten vorteilhaft klein gehalten werden.

Des Weiteren wird vorgeschlagen, dass in zumindest einem Verfahrensschritt des Verfahrens eine, insbesondere die bereits genannte, Codierung der Messzusatzinformation geändert wird. Vorzugsweise wird die Codierung in Abhängigkeit von einer Benutzereingabe, insbesondere mittels eines Bedienelements des Materialuntersuchungsgeräts, geändert. Die Codierung umfasst zumindest eine Zuweisung, insbesondere eine Vielzahl an Zuweisungen, eines codierenden Elements, beispielsweise einer Farbe des Anzeigeobjekts, eines Muster des Anzeigeobjekts, eines Symbols des Anzeigeobjekts o. dgl., zu einem codierten Element, beispielsweise einem Wertebereich der Materialeigenschaft, einer ermittelten Materialart o. dgl. Vorzugsweise wird bei einer Änderung der Codierung die Zuweisung, insbesondere einzelne Zuweisungen, aktiviert oder deaktiviert. Insbesondere stellt die Anzeigeeinheit das Anzeigeobjekt bei einer Deaktivierung der Zuweisung in einer Standarddarstellung dar. Optional umfasst die Anzeigeeinheit zumindest einen Anzeigemodus, in welchem das Anzeigeobjekt mit deaktivierter Zuweisung vollständig ausgeblendet wird. Optional aktiviert oder deaktiviert die Steuereinheit durch die Aktivierung oder Deaktivierung der Zuweisung eine Ermittlung des entsprechenden codierten Elements. Alternativ ändert die Steuereinheit, insbesondere ausgelöst durch eine Benutzereingabe, die Zuweisung selbst, d.h. sie weist dem codierten Element ein neues codierendes Element, insbesondere eine andere Farbe, zu. Optional sind in dem Speicher der Steuereinheit zumindest zwei verschiedene Codierungen hinterlegt, insbesondere aus welchen ein Benutzer auswählen kann. Durch die erfindungsgemäße Ausgestaltung ist das Materialuntersuchungsgerät vorteilhaft flexibel und individuell auf den Benutzer, insbesondere auch auf Benutzer mit einer Farbsehstörung, anpassbar. Insbesondere kann der Benutzer vorteilhaft zwischen allgemeinen Anzeigemodi mit vielen aktiven Zuweisungen und einer hohen Informationsfülle, beispielsweise zu einer Ermittlung einer möglichen Bohrstelle, und speziellen Anzeigemodi mit wenigen aktiven Zuweisungen und mit hoher Übersichtlichkeit, beispielsweise zur Verfolgung einer elektrischen Leitung, wechseln.

Darüber hinaus wird vorgeschlagen, dass in zumindest einem Verfahrensschritt ein einen, insbesondere den bereits genannten, Sensorbereich des Materialuntersuchungsgeräts darstellendes weiteres Anzeigeobjekt einen Darstellungswechsel in Abhängigkeit von der ermittelten Materialeigenschaft durchläuft. Vorzugsweise zeigt die Anzeigeeinheit zumindest in der Panoramaansicht einen über den Sensorbereich des Materialuntersuchungsgeräts hinausgehenden Ausschnitt des Untersuchungsobjekts. Der Sensorbereich bezeichnet insbesondere ein der Sensoreinheit zugeordnetes Messvolumen, in welchem die Empfindlichkeit der Sensoreinheit oberhalb eines vorgegebenen Schwellenwerts liegt. Erfindungsgemäß bewegt sich der Sensorbereich zusammen mit dem Materialuntersuchungsgerät und/oder mit einer Ausrichtung der Sensoreinheit relativ zu dem Untersuchungsobjekt mit. Das weitere Anzeigeobjekt, welches den Sensorbereich darstellt, umfasst eine Fokusmarkierung, welche die empfindlichste Stelle der Sensoreinheit repräsentiert, und/oder zumindest eine Grenzmarkierung, welche diejenige Stelle markiert, an der der Schwellenwert der Empfindlichkeit der Sensoreinheit erreicht wird. Vorzugsweise wechselt die Anzeigeeinheit den angezeigten Sensorbereich zur Ausgabe einer Warnung oder einer Entwarnung. Besonders bevorzugt wechselt eine Darstellung des angezeigten Sensorbereichs zwischen zumindest zwei Farben. Beispielsweise stellt die Anzeigeeinheit den Sensorbereich in einer Darstellung, insbesondere in rot, dar, wenn eine vorgegebene Bohrtiefe aufgrund eines Fremdobjekts nicht erreicht werden kann, und in einer anderen Darstellung, insbesondere in grün oder weiß, wenn kein Fremdobjekt innerhalb der vorgegebenen Bohrtiefe ermittelt wurde. Optional blendet die Anzeigeeinheit zusammen mit dem Darstellungswechsel des angezeigten Sensorbereichs ein Zusatzanzeigeobjekt ein und aus, welches symbolhaft und/oder als Textausgabe vor einem Bohren an der aktuellen Stelle des Materialuntersuchungsgeräts warnt. Alternativ wird der angezeigte Sensorbereich mit der aktuell erfassten Materialart codiert angezeigt. Durch die erfindungsgemäße Ausgestaltung kann vorteilhaft eine anwendungsabhängige Auswertung der Materialeigenschaft angezeigt werden, insbesondere mit vorteilhaft wenigen weiteren Anzeigeobjekten.

Weiter wird vorgeschlagen, dass in zumindest einem Verfahrensschritt des Verfahrens die Messzusatzinformation eine, insbesondere die bereits genannte, Tiefenreferenz in Abhängigkeit von der ermittelten Materialeigenschaft darstellt. Vorzugsweise wird die Tiefenreferenz mit der aktuell erfassten Materialart codiert dargestellt. Optional stellt der Benutzer über ein Bedienelement des Materialuntersuchungsgeräts einen, insbesondere über den aktuellen Sensorbereich hinausgehende, Wertebereich für die Position des Materialuntersuchungsgeräts ein. Ermittelt die Steuereinheit mehrere Materialarten innerhalb des festgelegten Wertebereichs für die Position des Materialuntersuchungsgeräts, ist die Tiefenreferenz vorzugsweise an dem Fremdobjekt mit dem geringsten Abstand von der Oberfläche des Untersuchungsobjekts ausgerichtet und optional mit dessen Materialart oder in einer neutralen Farbe codiert. Durch die erfindungsgemäße Ausgestaltung kann bei mehreren Fremdobjekten die Tiefenreferenz vorteilhaft einfach einem bestimmten Fremdobjekt zugeordnet werden.

Weiterhin wird vorgeschlagen, dass in zumindest einem Verfahrensschritt des Verfahrens eine Codierung der Messzusatzinformation eingeblendet wird. Vorzugsweise stellt die Anzeigeeinheit während eines Betriebs des Materialuntersuchungsgeräts zusammen mit einer aktuellen Messung zumindest ein weiteres Anzeigeobjekt dar, welches diejenige, insbesondere einzelne, Zuweisung der Codierung anzeigt, welche sich auf die aktuell erfasste Materialeigenschaft, insbesondere Materialart, bezieht. Vorzugsweise blendet die Anzeigeeinheit in zumindest einem Verfahrensschritt des Verfahrens eine Legende der Codierung ein, welche sämtliche, alle aktivierten, alle zur Generierung der aktuellen Anzeige verwendeten oder eine, insbesondere im Voraus eingestellte, Auswahl an Zuweisungen der Codierung umfasst. Das Anzeigen der Legende kann während eines Betriebs des Materialuntersuchungsgeräts dauerhaft zusammen mit einer Anzeige einer aktuellen Messung, beispielsweise als Seitenleiste, eingeblendet werden oder die Anzeige der aktuellen Messung temporär überdeckend eingeblendet werden. Vorzugsweise löst ein Benutzer durch die Betätigung eines Bedienelements des Materialuntersuchungsgeräts ein Einblenden der Codierung aus. Ein Ausblenden der Codierung, insbesondere der Legende, kann durch Betätigung oder Loslassen eines Bedienelements des Materialuntersuchungsgeräts oder automatisch, insbesondere nach Ablauf einer vorgegebenen Zeitspanne, erfolgen. Durch die erfindungsgemäße Ausgestaltung kann das Materialuntersuchungsgerät vorteilhaft einfach bedient und ausgelesen werden.

Ferner wird vorgeschlagen, dass in zumindest einem Verfahrensschritt des Verfahrens ein dargestellter Wertebereich für die Materialeigenschaft und/oder die Messzusatzinformation angepasst wird. Eine Anpassung des Wertebereichs kann durch die Steuereinheit automatisch angepasst werden, insbesondere in Abhängigkeit von einem erfassten Wertebereich der Materialeigenschaft, oder durch einen Benutzer durch Betätigung eines Bedienelements des Materialuntersuchungsgeräts angepasst werden. Beispielsweise werden/wird bei der Anpassung des Wertebereichs ein minimaler Wert und/oder ein maximaler Wert des Wertebereichs festgelegt, welcher angezeigt wird. Beispielsweise werden bei der Anpassung des Wertebereichs zwischen einer logarithmischen und einer linearen Skalierung des Wertebereichs gewechselt. Durch die erfindungsgemäße Ausgestaltung kann die Anzeige vorteilhaft anwendungsabhängig und vorteilhaft flexibel gestaltet werden. Insbesondere kann eine Fläche der Anzeige vorteilhaft gut genutzt werden.

Weiter geht die Erfindung aus von einem, insbesondere dem bereits genannten oder einem alternativen, Verfahren zum Betrieb eines, insbesondere handhaltbaren, insbesondere des bereits genannten oder eines alternativen, Materialuntersuchungsgeräts, bei welchem ein, insbesondere das bereits genannte, Messsignal in ein, insbesondere das bereits genannte, Untersuchungsobjekt ausgesandt wird und eine Position des Materialuntersuchungsgeräts relativ zu einer, insbesondere der bereits genannten, Oberfläche des Untersuchungsobjekts erfasst wird, um eine, insbesondere die bereits genannte, Materialeigenschaft einer hinter der Oberfläche verborgenen Region des Untersuchungsobjekts ortsaufgelöst und/oder richtungsaufgelöst zu ermitteln.

Es wird vorgeschlagen, dass in zumindest einem Verfahrensschritt eine Darstellung der Materialeigenschaft als Bild von dem Materialuntersuchungsgerät gespeichert wird. Insbesondere speichert eine, insbesondere die bereits genannte, Steuereinheit des Materialuntersuchungsgeräts das Bild in einer, insbesondere in der bereits genannten, Speichereinheit des Materialuntersuchungsgeräts. Die Steuereinheit erstellt in Abhängigkeit von dem Messsignal zumindest ein, insbesondere das bereits genannte, Anzeigeobjekt, welches in dem Bild dargestellt wird. In einer bevorzugten Ausgestaltung, bei welcher beide Verfahren in Kombination umgesetzt werden, ergeben sich insbesondere vorteilhafte Synergieeffekte. Optional gibt die Steuereinheit das Bild auf einer, insbesondere der bereits genannten, Anzeigeeinheit des Materialuntersuchungsgeräts aus. Beispielsweise zeigt das Bild eine Schnittansicht des Untersuchungsobjekts, eine Aufsicht auf die, insbesondere transparent dargestellte, Oberfläche des Untersuchungsobjekts, einen dreidimensionalen Ausschnitt aus dem Untersuchungsobjekt, einen ein- oder mehrdimensionalen räumlichen Verlauf der Materialeigenschaft o. dgl. Vorzugsweise wird das Bild in einem nicht-flüchtigen Speicher der Speichereinheit und/oder auf einer Speicherkarte gespeichert. Optional werden von einer, insbesondere der bereits genannten, Sensoreinheit des Materialuntersuchungsgeräts erfasste Rohdaten und/oder von der Steuereinheit aus den Rohdaten ermittelte Werte der Materialeigenschaft, insbesondere zusätzlich zu dem Bild, insbesondere in dem nicht-flüchtigen Speicher, gespeichert. Alternativ werden von der Sensoreinheit erfasste Rohdaten und/oder von der Steuereinheit aus den Rohdaten ermittelte Werte der Materialeigenschaft in dem flüchtigen Speicher hinterlegt und insbesondere nach Erstellen des Bildes oder nach Beenden einer Messreihe, in welcher insbesondere mehrere Bilder erstellt werden, aktiv gelöscht und/oder zu einem Überschreiben freigegeben.

Durch die erfindungsgemäße Ausgestaltung des Verfahrens kann die Materialeigenschaft vorteilhaft für eine spätere Verwendung und/oder Auswertung durch dasselbe Gerät erfasst und gesichert werden. Insbesondere kann vorteilhaft auf ein externes Aufnahmegerät zu einer Aufnahme des Bildes verzichtet werden. Insbesondere kann eine große Fülle an Informationen gespeichert werden. Insbesondere können auch für außerhalb des aktuellen Sensorbereichs liegende Fremdobjekte Informationen vorteilhaft gespeichert werden. Insbesondere kann vorteilhaft die bereits vorausgewertete und, insbesondere farblich, codierte Materialeigenschaft gespeichert werden.

Weiter wird vorgeschlagen, dass in zumindest einem Verfahrensschritt des Verfahrens eine mittels einer, insbesondere der bereits genannten, Anzeigeeinheit des Materialuntersuchungsgeräts erstellte, aktuelle Anzeige der Materialeigenschaft gespeichert wird. Insbesondere erstellen die Steuereinheit und die Anzeigeeinheit einen Screenshot, der als das Bild abgespeichert wird. Der Screenshot kann die gesamte Anzeige der Anzeigeeinheit umfassen, beispielsweise inklusive einer Menüleiste, Statusanzeige, Seitenleisten o. dgl., oder einen Ausschnitt der Anzeige, insbesondere einen die Materialeigenschaft darstellenden Ausschnitt der Anzeige. Optional wählt der Benutzer über ein Bedienelement des Materialuntersuchungsgeräts den als Screenshot abzuspeichernden Ausschnitt der Anzeige beim Speicher und/oder in einer dem Speichern vorausgehenden Einstellungsphase des Verfahrens aus. Insbesondere speichert die Steuereinheit eine Kopie eines an die Anzeigeeinheit gesendeten Datenstroms zur Ausgabe der Anzeige als Bild in der Speichereinheit ab. Durch die erfindungsgemäße Ausgestaltung kann ein Benutzer die Materialeigenschaft vorteilhaft einfach als Bild speichern. Insbesondere kann die Anzeige der Anzeigeeinheit vorteilhaft als Voransicht des Bildes dienen.

Ferner wird vorgeschlagen, dass in zumindest einem Verfahrensschritt des Verfahrens das Bild aus aktuellen Messdaten des Materialuntersuchungsgeräts speziell zu einem Speichern neu generiert wird. Die Steuereinheit generiert das Bild unabhängig von der Anzeige und speichert diese in der Speichereinheit, insbesondere ohne Ausgabe mittels der Anzeigeeinheit. Optional wird das Bild in einer anderen, insbesondere höheren, Auflösung abgespeichert als die Anzeige ausgegeben wird. Durch die erfindungsgemäße Ausgestaltung kann das Bild vorteilhaft unabhängig von einer Beschränkung der Anzeigeeinheit, insbesondere Größe und Auflösungsvermögen des Displays, gespeichert werden. Insbesondere kann in dem Bild ein höherer Informationsgehalt eingefügt werden.

Weiterhin wird vorgeschlagen, dass das Bild zusätzlich aus Zusatzdaten neu generiert wird, welche in einer zuvor durchgeführten Messung erfasst wurden. Vorzugsweise hinterlegt die Speichereinheit zumindest temporär aktuelle Messdaten als Zusatzdaten in der Speichereinheit oder in einem Speicher der Steuereinheit zu einer späteren Nutzung, insbesondere zu einer Darstellung der Materialeigenschaft in einen Ausschnitt des Untersuchungsobjekts, der über einen aktuellen Sensorbereich des Materialuntersuchungsgeräts hinausgeht. Insbesondere generiert die Steuereinheit das Bild und/oder die Anzeige aus den aktuellen Messdaten, welche insbesondere in dem aktuellen Sensorbereich erfasst wurden, und aus den Zusatzdaten. Durch die erfindungsgemäße Ausgestaltung kann das Bild einen vorteilhaft großen Ausschnitt des Untersuchungsobjekts darstellen. Insbesondere kann der gemessene Ausschnitt des Untersuchungsobjekts in vorteilhaft wenigen Bildern gespeichert werden. Insbesondere kann ein Overhead der Bilder vorteilhaft klein gehalten werden.

Des Weiteren wird vorgeschlagen, dass in zumindest einem Verfahrensschritt des Verfahrens das neu generierte Bild in einer von einer Darstellungsform einer aktuellen Anzeige einer Anzeigeeinheit des Materialuntersuchungsgeräts unterschiedlichen Darstellung gespeichert wird. Eine Anzeige der Anzeigeeinheit wird von der Steuereinheit aus den aktuellen Messdaten und optional aus den Zusatzdaten erzeugt, die von der Sensoreinheit erfasst und von der Steuereinheit verarbeitet wurden. Die Anzeige umfasst neben der Materialeigenschaft als weitere oder zusätzliche Anzeigeobjekte beispielsweise eine Statusanzeige, eine Menüleiste, eine Uhrzeit, Warnhinweise, den aktuellen Sensorbereich o. dgl., welche insbesondere mit der Materialeigenschaft teilweise überlappend dargestellt werden. Vorzugsweise wählt der Benutzer oder die Steuereinheit über ein voreingestelltes Profil in zumindest einem Verfahrensschritt des Verfahrens aus, ob und insbesondere welche Anzeigeobjekte in dem Bild, insbesondere zusätzlich zur Materialeigenschaft, gespeichert werden. Das abgespeicherte Bild kann identisch mit der Anzeige der Anzeigeeinheit sein oder von der Anzeige abweichen. Optional wird das neu generierte Bild zu einer Bestätigung durch den Benutzer auf der Anzeigeeinheit ausgegeben. Optional wird das Bild in einem mehrlagigen Bildformat abgespeichert, wobei insbesondere eine Lage des Bildes die Materialeigenschaft umfasst und zumindest eine weitere Lage weitere Anzeigeobjekte und/oder zusätzliche Anzeigeobjekte umfasst. Durch die erfindungsgemäße Ausgestaltung kann das Bild vorteilhaft an eine weitere Verwendung und/oder Auswertung angepasst werden. Insbesondere können weitere Anzeigeobjekte und Vorauswertungen zusätzlich in das Bild integriert werden, welche insbesondere in der Anzeige zur Durchführung der Messung nicht notwendig sind und/oder die Durchführung der Messung durch Überladen der Anzeige erschweren. Insbesondere können in dem Bild für die weitere Verwendung und/oder Auswertung irrelevante weitere und/oder zusätzlich Anzeigeobjekte vorteilhaft weggelassen werden. Ferner kann die Anzeige vorteilhaft auf den Messprozess mit der Sensoreinheit angepasst werden, beispielsweise durch Einblenden von Ausrichtungshilfen o. dgl., insbesondere ohne Rücksicht darauf zu nehmen, ob die Anzeige für die Auswertung und/oder weitere Verwendung geeignet ist.

Ferner wird vorgeschlagen, dass in zumindest einem Verfahrensschritt des Verfahrens zumindest zwei gespeicherte Bilder der Materialeigenschaft in ein einzelnes Bild zusammengefasst werden. Die Steuereinheit fügt zumindest zwei Bilder, welche an unterschiedlichen Positionen des Materialuntersuchungsgeräts relativ zu der Oberfläche des Untersuchungsobjekts erstellt wurden oder welche an der gleichen Position mit unterschiedlichen Einstellungen des Materialuntersuchungsgeräts, insbesondere der Sensoreinheit, erstellt wurden, zu einem einzelnen Bild zusammen. Vorzugsweise speichert die Steuereinheit die Bilder zu einer Zusammenführung zusammen mit einem Overhead ab. Der Overhead umfasst insbesondere die Position des Materialuntersuchungsgeräts relativ zu der Oberfläche des Untersuchungsobjekts, an welchem das Bild erfasst wurde, und/oder mit welchen Einstellungen der Sensoreinheit das Bild erfasst wurde. Der Overhead kann als eigenständige Datei ausgebildet sein oder zusammen mit dem zugehörigen Bild in einem einzelnen Metafile gespeichert sein. Vorzugsweise fusioniert die Steuereinheit bei sich überlappenden Bildern einen Überlappungsbereich der Bilder mit einem an sich bekannten Stitching-Verfahren. Optional interpoliert die Steuereinheit bei voneinander beabstandeten Bildern einen Zwischenbereich zwischen den Bildern. Durch die erfindungsgemäße Ausgestaltung kann ein vorteilhaft großer Ausschnitt des Untersuchungsobjekts, welcher insbesondere größer ist als das Materialuntersuchungsgerät selbst, in einem einzelnen Bild dargestellt werden.

Darüber hinaus wird vorgeschlagen, dass in zumindest einem Verfahrensschritt des Verfahrens ein Speichern des Bilds von einem Benutzer des Materialuntersuchungsgeräts ausgelöst wird. Insbesondere umfasst das Materialuntersuchungsgerät zumindest ein Bedienelement zu einem Auslösen des Speicherns. Optional zeigt die Anzeigeeinheit abhängig von der aktuellen Position des Materialuntersuchungsgeräts und der Position, an welcher zuletzt ein Bild gespeichert wurde, an, ob an der aktuellen Position ein neues Bild gespeichert werden sollte, insbesondere zu einem lückenlosen Zusammenfügen mehrerer Bilder und/oder zu einer Vermeidung von redundanten Daten. Vorzugsweise ist das Bedienelement zu einem Auslösen des Speicherns mit derselben Hand bedienbar, mit welcher das Materialuntersuchungsgerät gehalten wird, insbesondere durch Anordnung dieses Bedienelements am und/oder in der Nähe eines Griffs des Materialuntersuchungsgeräts. Durch die erfindungsgemäße Ausgestaltung hat der Benutzer eine vorteilhaft große Kontrolle über die Auswahl dessen, was gespeichert wird, und über das dazu benötigte Datenvolumen. Insbesondere kann eine nachgelagerte Durchsicht der Bilder vorteilhaft kurz ausfallen.

Des Weiteren wird vorgeschlagen, dass in zumindest einem Verfahrensschritt des Verfahrens ein Speichern des Bilds automatisch erfolgt. Die Steuereinheit speichert Bilder insbesondere in regelmäßigen räumlichen und/oder zeitlichen Abständen ab. Zusätzlich oder alternativ wird ein Speichern durch die Detektion eines Fremdobjekts in dem ansonsten homogenen Grundmaterial des Untersuchungsobjekts ausgelöst. Das automatische Speichern kann insbesondere für die gesamte Zeitdauer eines Betriebs des Materialuntersuchungsgeräts erfolgen.

Alternativ erfolgt das automatische Speichern für die Zeitdauer eines von einem Benutzer aktivierten Aufnahmemodus des Materialuntersuchungsgeräts. Alternativ erfolgt das automatische Speichern für die Zeitdauer, in welcher ein Benutzer ein Bedienelement des Materialuntersuchungsgeräts aktiv, insbesondere entgegen einer Rückstellkraft, betätigt. Durch die erfindungsgemäße Ausgestaltung kann der Ausschnitt vorteilhaft systematisch erfasst und in Bildern abgespeichert werden. Insbesondere kann ein lückenloses Speichern der Materialeigenschaft vorteilhaft einfach erreicht werden.

Weiterhin wird vorgeschlagen, dass in zumindest einem Verfahrensschritt des Verfahrens das Bild über eine, insbesondere die bereits genannte, Schnittstelle des Materialuntersuchungsgeräts an eine externe Speichervorrichtung übermittelt wird. Die Schnittstelle kann leitungsgebunden, beispielsweise als USB-Anschluss, als Lightning-Anschluss, als R-232-Anschluss, als Ethernet-Anschluss o. dgl., drahtlos, insbesondere funkwellengebunden, beispielsweise als Wi-Fi-Modul, Bluetooth-Modul, ZigBee-Modul o. dgl., und/oder datenträgergebunden, insbesondere als Speicherkartenleser und -schreiber, ausgebildet sein. Vorzugsweise übermittelt die Steuereinheit das Bild über die Schnittstelle an der externen Speichervorrichtung, insbesondere zu einer Bildnachbearbeitung des Bilds, zu einer Auswertung der in dem Bild gezeigten Materialeigenschaft und/oder zu einer digitalen Protokollierung einer Messung mit dem Materialuntersuchungsgerät. Alternativ oder zusätzlich übermittelt die Steuereinheit über die Schnittstelle Rohdaten von der Sensoreinheit und/oder die von der Steuereinheit ermittelte Materialeigenschaft an die externe Speichervorrichtung. Die externe Speichervorrichtung kann beispielsweise als Smartphone, Tablet, Server, PC o. dgl. ausgebildet sein. Durch die erfindungsgemäße Ausgestaltung kann die Speichereinheit des Materialuntersuchungsgeräts vorteilhaft klein gehalten werden oder durch den Speicher der Steuereinheit realisiert werden. Insbesondere bei einer zumindest teilweisen Auslagerung der Auswertung des Messsignals kann eine maximale Rechenleistung und ein Energieverbrauch der Steuereinheit vorteilhaft klein gehalten werden.

Darüber hinaus wird ein, insbesondere handhaltbares, Materialuntersuchungsgerät mit einer, insbesondere der bereits genannten, Steuereinheit und mit einer, insbesondere der bereits genannten, Anzeigeeinheit, insbesondere einem Farbdisplay, zu einer Durchführung eines erfindungsgemäßen Verfahrens vorgeschlagen. Das Materialuntersuchungsgerät umfasst die Sensoreinheit, insbesondere Antenneneinheit, welche zumindest ein Sendeelement zu einem Aussenden von elektromagnetischen Wellen, insbesondere im Mikrowellenbereich und/oder im Radiowellenbereich, und zumindest ein Empfangselement zu einem Empfangen von elektromagnetische Wellen, insbesondere im Mikrowellenbereich und/oder im Radiowellenbereich, umfasst. Optional ist das Sendeelement und das Empfangselement durch dasselbe Bauteil, insbesondere durch dasselbe Antennenelement, gebildet. Die Sensoreinheit umfasst vorzugsweise eine Sende- und Empfangselektronik mit beispielsweise einem Signalgenerator, einem Verstärker, analogen und/oder digitalen Signalfiltern o. dgl. Das Materialuntersuchungsgerät umfasst vorzugsweise ein Gehäuse, welches die Sensoreinheit aufnimmt und/oder an welchem die Sensoreinheit angeordnet ist. Unter "handhaltbar" soll insbesondere ohne Zuhilfenahme einer Haltevorrichtung und/oder Transportvorrichtung mit einer Hand haltbar und/oder transportierbar verstanden werden. Insbesondere weist das Materialuntersuchungsgerät eine Masse von weniger als 20 kg, bevorzugt weniger als 10 kg, besonders bevorzugt von weniger als 5 kg auf. Optional weist das Materialuntersuchungsgerät einen vom Gehäuse abstehenden Griff in das Gehäuse eingelassene Griffmulden und/oder an dem Gehäuse angeordnete Griffflächen zu einer Führung des Materialuntersuchungsgeräts durch einen Benutzer auf. Vorzugsweise umfasst das Materialuntersuchungsgerät zumindest das Wälzelement, insbesondere zwei, bevorzugt vier Wälzelemente, welche/s an dem Gehäuse gelagert sind/ist. Die Anzeigeeinheit ist an dem Gehäuse, insbesondere an einer von den Wälzelement abgewandten Seite des Gehäuses, angeordnet, insbesondere darin eingelassen. Das Materialuntersuchungsgerät umfasst die zumindest eine Positionserfassungseinheit, insbesondere ein Odometer. Das Materialuntersuchungsgerät umfasst zumindest die Speichereinheit. Die Speichereinheit kann einen flüchtigen Speicher, insbesondere zu einem Einblenden von Werten der Materialeigenschaft aus einer vorhergehenden Messung in eine aktuelle Messung, und/oder einen nicht-flüchtigen Speicher, insbesondere zu einer der aktuellen Messung nachgelagerten Auswertung der Materialeigenschaft, umfassen. Optional umfasst die Speichereinheit ein Schreib- und/oder Leseelement für auswechselbare Datenträger, insbesondere Speicherkarten und/oder Memory-Sticks. Alternativ oder zusätzlich umfasst das Materialuntersuchungsgerät eine Schnittstelle zu einer leitungsgebundenen und/oder drahtlosen, insbesondere funkwellengebunden, Kommunikation mit einem externen Gerät, insbesondere zu einer externen Auswertung und/oder Aufbereitung der erfassten ortsabhängigen Materialeigenschaft. Das Materialuntersuchungsgerät umfasst zumindest ein Bedienelement, insbesondere mehrere Bedienelemente, wie beispielsweise einen Knopf, einen Schalter, einen Schiebetaster, einen Drehregler o. dgl., zu einer Benutzereingabe. Alternativ oder zusätzlich ist das Display der Anzeigeeinheit als Touchscreen ausgebildet. Insbesondere sind/ist die Steuereinheit die Speichereinheit, die Schnittstelle, die Positionserfassungseinheit und/oder die Sensoreinheit innerhalb des Gehäuses angeordnet. Durch die erfindungsgemäße Ausgestaltung kann ein Materialuntersuchungsgerät bereitgestellt werden, das vorteilhaft benutzerfreundlich und vorteilhaft intuitiv handhabbar ist. Insbesondere kann ein Materialuntersuchungsgerät zur Verfügung gestellt werden, mit welchem eine vorteilhaft hohe Informationsfülle vorteilhaft übersichtlich darstellbar ist.

Das erfindungsgemäße Verfahren und/oder das erfindungsgemäße Materialuntersuchungsgerät sollen/soll hierbei nicht auf die oben beschriebene Anwendung und Ausführungsform beschränkt sein. Insbesondere kann das erfindungsgemäße Verfahren und/oder das erfindungsgemäße Materialuntersuchungsgerät zu einer Erfüllung einer hierin beschriebenen Funktionsweise eine von einer hierin genannten Anzahl von einzelnen Elementen, Bauteilen und Einheiten sowie Verfahrensschritten abweichende Anzahl aufweisen. Zudem sollen bei den in dieser Offenbarung angegebenen Wertebereichen auch innerhalb der genannten Grenzen liegende Werte als offenbart und als beliebig einsetzbar gelten.

### Zeichnungen

Weitere Vorteile ergeben sich aus der folgenden Zeichnungsbeschreibung. In den Zeichnungen ist ein Ausführungsbeispiel der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine schematische Darstellung eines erfindungsgemäßen Materialuntersuchungsgeräts,
- Fig. 2: eine schematische Darstellung eines erfindungsgemäßen Verfahrens,
- Fig. 3: eine schematische Darstellung von Anzeigeobjekten im Zuge einer Tiefenmessung mittels des erfindungsgemäßen Verfahrens,
- Fig. 4: eine schematische Darstellung von Anzeigeobjekten im Zuge eines Wechsels einer Darstellungsform im Zuge des erfindungsgemäßen Verfahrens,
- Fig. 5: eine schematische Darstellung von Anzeigeobjekten im Zuge einer Feuchtemessung mittels des erfindungsgemäßen Verfahrens und
- Fig. 6: eine schematische Darstellung von Anzeigeobjekten mit einer Ausrichtungshilfe im Zuge des erfindungsgemäßen Verfahrens.

### Beschreibung des Ausführungsbeispiels

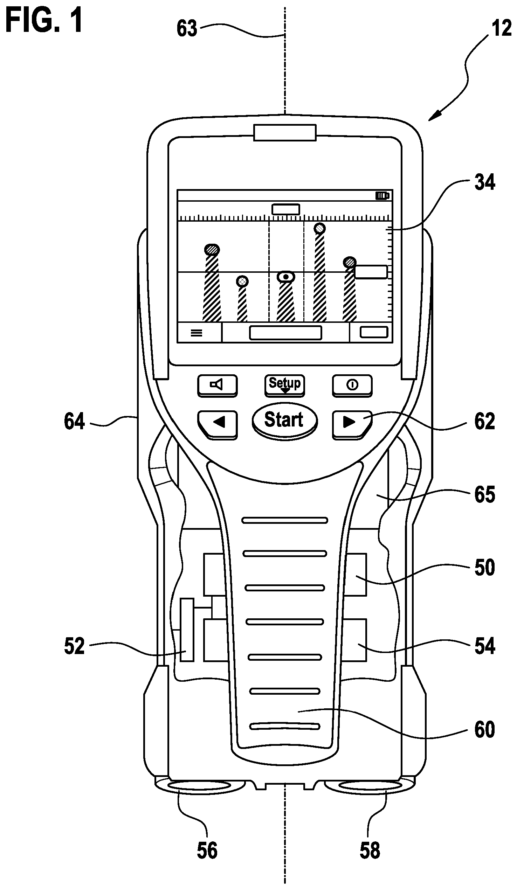

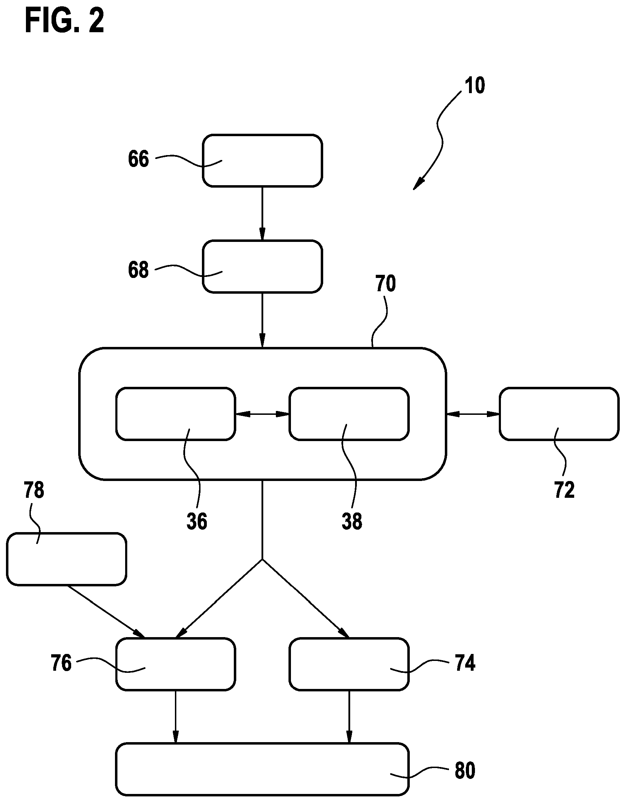

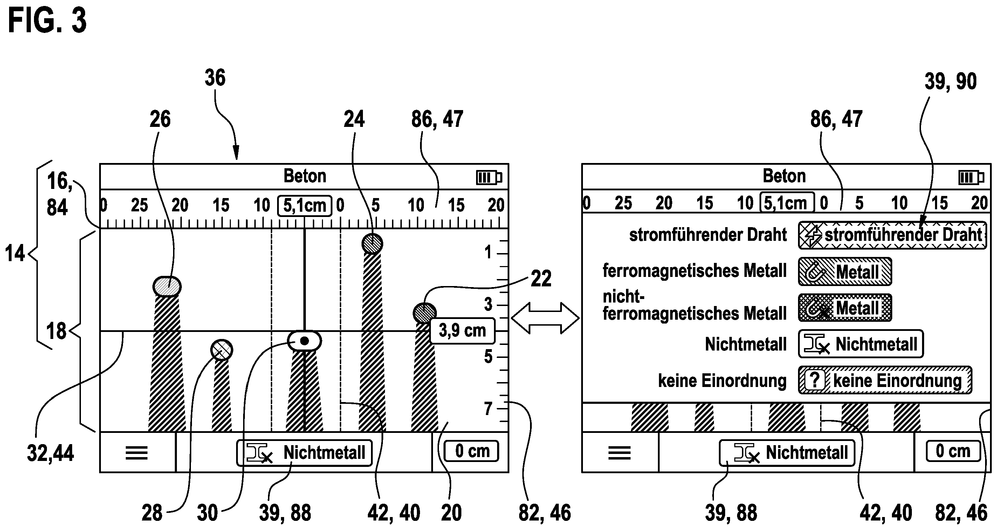

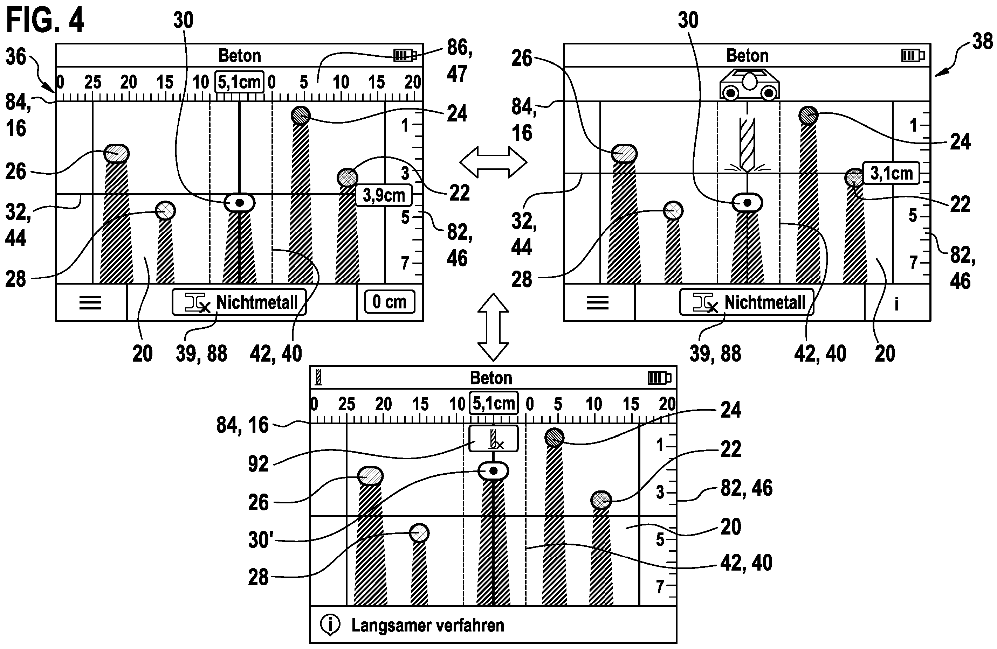

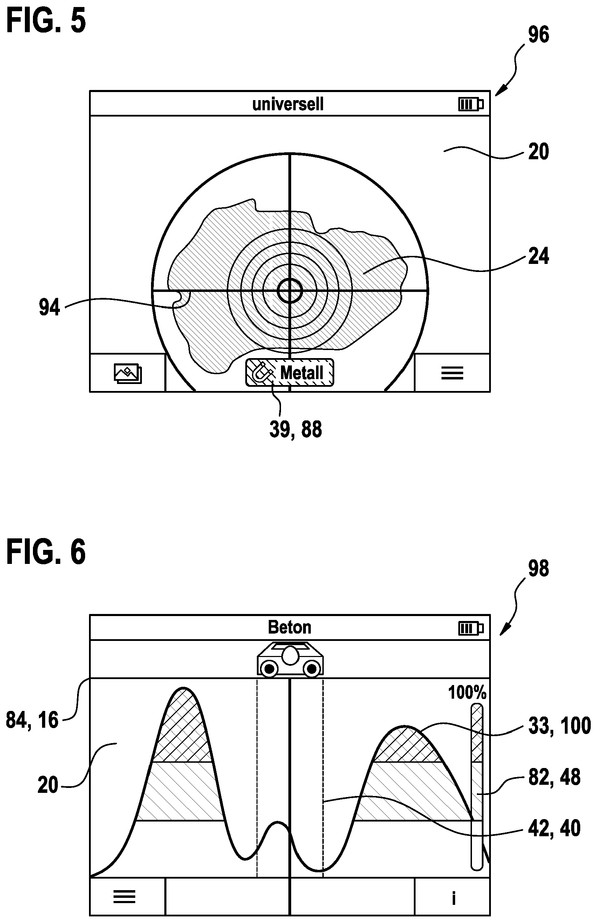

Figur 1 zeigt ein Materialuntersuchungsgerät 12. Das Materialuntersuchungsgerät 12 ist insbesondere zu einer Ortung von Fremdobjekten und/oder Einlagerungen, insbesondere Wasser, in einem Grundmaterial eines Untersuchungsobjekts 14 (vgl. Figur 3), insbesondere einer Wand, einem Boden, einer Decke o. dgl., ausgebildet. Das Materialuntersuchungsgerät 12 umfasst ein Gehäuse 64. Das Materialuntersuchungsgerät 12 umfasst eine Sensoreinheit 65 zu einem Aussenden und Empfangen von elektromagnetischen Wellen, insbesondere Mikrowellen und/oder Radiowellen. Die Sensoreinheit 65 ist in dem Gehäuse 64 und/oder an einer Auflageseite des Gehäuses 64 angeordnet. Die Auflageseite des Gehäuses 64 ist insbesondere dazu vorgesehen, bei einer Messung mit dem Materialuntersuchungsgerät 12 einer Oberfläche 16 des Untersuchungsobjekts 14 zugewandt ausgerichtet zu werden. Das Materialuntersuchungsgerät 12 umfasst vorzugsweise einen, insbesondere vom Gehäuse 64 abstehenden oder durch das Gehäuse 64 geformten, Griff 60, zu einer manuellen Führung des Materialuntersuchungsgeräts 12 entlang der Oberfläche 16 des Untersuchungsobjekts 14. Vorzugsweise umfasst das Materialuntersuchungsgerät 12 zumindest ein Wälzelement 56, 58, vorzugsweise mehrere, insbesondere vier, Wälzelemente 56, 58. Die Wälzelemente 56, 58 sind an dem Gehäuse 64 gelagert. Insbesondere sind die Wälzelemente 56, 58 zu einem direkten Kontakt mit der Oberfläche 16 und zu einer beabstandeten Anordnung der Auflageseite des Gehäuses 64, insbesondere der Sensoreinheit 65, von der Oberfläche 16 des Untersuchungsobjekts 14 vorgesehen. Das Materialuntersuchungsgerät 12 umfasst zumindest einen Wegsensor (hier nicht dargestellt), der insbesondere mittels einer Erfassung eines Abwälzens zumindest eines der Wälzelemente 56, 58 zu einer Ermittlung einer Verschiebung des Materialuntersuchungsgeräts 12 relativ zu der Oberfläche 16 des Untersuchungsobjekts 14 vorgesehen ist. Vorzugsweise weist das Materialuntersuchungsgerät 12 eine Längsachse 63 auf. Insbesondere erstreckt sich eine Rotationsebene zumindest eines der Wälzelemente 56, 58 zumindest im Wesentlichen senkrecht zu der Längsachse 63. Alternativ ist die Rotationsebene zumindest eines der Wälzelemente 56, 58 zumindest im Wesentlichen parallel zu der Längsachse 63 angeordnet oder zusätzlich derart ausrichtbar. Das Materialuntersuchungsgerät 12 umfasst eine Steuereinheit 50 zu einer Durchführung eines Verfahrens 10, das in den Figuren 2 bis 6 näher erläutert wird. Das Materialuntersuchungsgerät 12 umfasst eine Speichereinheit 54. Das Materialuntersuchungsgerät 12 umfasst eine Anzeigeeinheit 34 zu einer Darstellung eines Messergebnisses des Sensors. Besonders bevorzugt ist die Anzeigeeinheit 34 als Farbdisplay ausgebildet. Die Anzeigeeinheit 34 ist auf einer der Auflageseite abgewandten Seite des Gehäuses 64 angeordnet. Das Materialuntersuchungsgerät 12 umfasst zumindest ein Bedienelement 62. Das Materialuntersuchungsgerät 12 ist beispielsweise zu einer Darstellung von Fremdobjekten in einer Schnittansicht des Untersuchungsobjekts 14 ausgebildet (vgl. Figuren 3 und 4, zu einer Darstellung von Fremdobjekten in einer Aufsicht auf die insbesondere transparent dargestellte Oberfläche 16 (vgl. Figur 5) und/oder zu einer Darstellung eines Kurvenverlaufs 100 des Messsignals, der Materialeigenschaft o. dgl. (vgl. Figur 6). Das Materialuntersuchungsgerät 12 kann insbesondere als Spezialgerät zu einer der genannten Darstellungen ausgebildet sein oder als Universalgerät, welches zwischen mehreren der genannten Darstellungen wechseln kann.

Figur 2 zeigt ein Flussdiagramm des Verfahrens 10. Das Verfahren 10 umfasst einen Messschritt 66. Das Verfahren 10 umfasst einen Speicherschritt 68. Das Verfahren 10 umfasst einen Anzeigeschritt 70. Das Verfahren 10 umfasst einen Codierungsanzeigeschritt 72. Das Verfahren 10 umfasst insbesondere einen Anzeigespeicherschritt 74. Alternativ oder zusätzlich umfasst das Verfahren 10 einen Bilderzeugungsschritt 76. Optional umfasst das Verfahren 10 einen Einstellungsschritt 78. Das Verfahren 10 umfasst einen Bildnachbearbeitungsschritt 80.

Das Verfahren 10 ist zum Betrieb eines Materialuntersuchungsgeräts 12 vorgesehen. In dem Messschritt 66 wird ein Messsignal in das Untersuchungsobjekt 14 (vgl. Fig. 3) ausgesandt. Eine Position des Materialuntersuchungsgeräts 12 wird von dem Wegsensor relativ zu der Oberfläche 16 des Untersuchungsobjekts 14 erfasst. Eine Materialeigenschaft einer hinter der Oberfläche 16 verborgenen Region 18 des Untersuchungsobjekts 14 wird ortsaufgelöst und/oder richtungsaufgelöst ermittelt. In dem Speicherschritt 68 wird die Materialeigenschaft und die Position zusammen in einem flüchtigen Speicher der Speichereinheit 54 und/oder in einem nicht-flüchtigen Speicher der Speichereinheit 54 von der Steuereinheit 50 hinterlegt. In dem Anzeigeschritt 70 wird die Materialeigenschaft als zumindest ein digitales Anzeigeobjekt 20, 22, 24, 26, 28, 30, 32 (siehe Figur 3) mittels der Anzeigeeinheit 34 dargestellt. In zumindest einem Verfahrensschritt stellt dasselbe Anzeigeobjekt 22, 24, 26, 28, 30, 32 zusätzlich zu der Materialeigenschaft eine Messzusatzinformation, insbesondere mittels farblicher Codierung 39, dar. Die Materialeigenschaft und die Messzusatzinformation werden in dem Anzeigeschritt 70 in jeweils einer verschiedenen Darstellungsform 36, 38 ausgegeben. Die aktuelle Darstellungsform 36, 38 des Anzeigeobjekts 32 wird mittels der Messzusatzinformation und/oder einer weiteren Messzusatzinformation kenntlich gemacht. In dem Anzeigeschritt 70 codiert die Messzusatzinformation eine Materialart. Während des Anzeigeschritts 70 oder eines Voreinstellungsschritts des Verfahrens 10 wird die Codierung 39 der Messzusatzinformation geändert, insbesondere mittels des Bedienelements 62. In dem Codierungsanzeigeschritt 72 wird die Codierung 39 der Messzusatzinformation eingeblendet.

Während des Anzeigeschritts 70 oder eines Voreinstellungsschritts des Verfahrens 10 wird ein dargestellter Wertebereich 46, 47, 48 (vgl. Figuren 3 bis 6) für die Materialeigenschaft und/oder die Messzusatzinformation angepasst, insbesondere mittels des Bedienelements 62.

In zumindest einem Verfahrensschritt des Verfahrens 10 wird eine Darstellung der Materialeigenschaft als Bild von dem Materialuntersuchungsgerät 12 gespeichert. In dem Anzeigespeicherschritt 74 wird eine mittels der Anzeigeeinheit 34 des Materialuntersuchungsgeräts 12 erstellte, aktuelle Anzeige der Materialeigenschaft gespeichert. Insbesondere wird das für die Anzeige gerenderte Bild als Datei in der Speichereinheit 54 oder einer externen Speichervorrichtung abgelegt. Das Materialuntersuchungsgerät 12 speichert nach Auslösen des Speicherns, insbesondere durch den Benutzer, die aktuelle Anzeige der Anzeigeeinheit 34 als Grafikdatei. Liegen Informationen außerhalb der aktuellen Anzeige vor, so werden diese optional mitabgespeichert. Im Fall eines Materialuntersuchungsgeräts 12, welches eine Verschiebung des Materialuntersuchungsgeräts 12 in einer Dimension parallel zur Oberfläche 16 erfassen kann, wird dadurch ein breiteres Bild erzeugt, welches z.B. die Informationen des gesamten gemessenen Bereichs enthält. Im Falle eines Materialuntersuchungsgeräts 12, welches eine Verschiebung des Materialuntersuchungsgeräts 12 in zwei Dimensionen parallel zur Oberfläche 16 erfassen kann, wird das Bild optional in diesen beiden Dimensionen im Vergleich zur Anzeige erweitert. In dem Bilderzeugungsschritt 76 wird das Bild aus aktuellen Messdaten des Materialuntersuchungsgeräts 12 speziell zu einem Speichern neu generiert. Das Bild wird in dem Bilderzeugungsschritt 76 zusätzlich aus Zusatzdaten neu generiert, welche in einer zuvor durchgeführten Messung erfasst und insbesondere in dem Speicherschritt 68 gespeichert wurden. In dem Bilderzeugungsschritt 76 wird das neu generierte Bild in einer von der Darstellungsform 36, 38 der aktuellen Anzeige der Anzeigeeinheit 34 des Materialuntersuchungsgeräts 12 unterschiedlichen Darstellung gespeichert. Das abzuspeichernde Bild wird in dem Bilderzeugungsschritt 76 aus den vorliegenden Messdaten unabhängig von der Anzeige erzeugt. Der Bilderzeugungsschritt 76 kann zusätzlich oder alternativ zu dem Anzeigespeicherschritt 74 durchgeführt werden. Optional werden Zusatzinformationen, welche insbesondere nicht in der Anzeige enthalten sind, in dem Bild eingeblendet. Optional wird die Art der Darstellung für eine externe Auswertung oder eine weitere Verwendung des Bilds angepasst. Vorzugsweise werden der Übersichtlichkeit halber in der Anzeige bestimmte Daten, z.B. die Tiefe eines gefundenen Fremdobjekts, nur zu dem aktuellen erfassten Fremdobjekt angezeigt. Im abgespeicherten Bild werden optional Daten, wie beispielsweise die Tiefe, eine mögliche Bohrtiefe und/oder die, insbesondere optisch codierte, Materialart, für jedes Fremdobjekt angegeben. Alternativ wird ein Speichern des Bilds automatisch, beispielsweise nach Beendigung einer Messung, ausgelöst. In zumindest einem Verfahrensschritt des Verfahrens 10 wird das Speichern des Bilds von einem Benutzer des Materialuntersuchungsgeräts 12 ausgelöst. In zumindest einem Verfahrensschritt des Verfahrens 10 erfolgt das Speichern des Bilds automatisch. Optional wird zusätzlich zu dem Bild ein Overhead gespeichert. Der Overhead umfasst beispielsweise Informationen über gefundene Fremdobjekte, über einen eindimensionalen Weg oder über eine zweidimensionale Fläche, welche/r mit dem Materialuntersuchungsgerät 12 abgefahren wurde. Alternativ wird der Overhead, insbesondere anstelle des Bilds, als Datendatei abgespeichert. In dem Bildnachbearbeitungsschritt 80 werden zumindest zwei gespeicherte Bilder der Materialeigenschaft in ein einzelnes Bild zusammengefasst. Insbesondere wird mittels Stitching in ein oder zwei Dimensionen aus mehreren Bildern ein einzelnes Bild erstellt. In dem Bildnachbearbeitungsschritt 80 wird das Bild optional über eine Schnittstelle 52 des Materialuntersuchungsgeräts 12 an eine externe Speichervorrichtung übermittelt.

Figur 3 zeigt beispielhaft eine Anzeige der Anzeigeeinheit 34. Die Anzeigeeinheit 34 zeigt die Anzeigeobjekte 20, 22, 24, 26, 28, 30, 32, welche eine Materialeigenschaft des Untersuchungsobjekts 14 darstellten. Die Anzeigeeinheit 34 stellt weitere Anzeigeobjekte 42, 82, 84, 86, 88 zu einer Auswertung der Materialeigenschaft dar, beispielsweise einen Sensorbereich 40 des Materialuntersuchungsgeräts 12, den Wertebereich 46, 47, insbesondere eine laterale Position und eine Tiefe, der Materialeigenschaft, die Oberfläche 16 des Untersuchungsobjekts 14, eine Kurzform der Codierung 39 o. dgl. Optional stellt die Anzeigeeinheit 34 zusätzliche Anzeigeobjekte dar, welche unabhängig von der Materialeigenschaft sind, beispielsweise eine Ladzustandsanzeige des Materialuntersuchungsgeräts 12, eine Menüleiste, eine Materialkalibrierung des Materialuntersuchungsgeräts 12 o. dgl. In zumindest einem Verfahrensschritt des Verfahrens 10 stellt die Messzusatzinformation eines der Anzeigeobjekte 32 eine Tiefenreferenz 44 in Abhängigkeit von der ermittelten Materialeigenschaft dar. Insbesondere stellt die Anzeigeeinheit 34 die Tiefenreferenz 44 mit der gleichen Codierung 39, insbesondere mit derselben Farbe, wie die aktuell im Sensorbereich 40 befindliche Materialeigenschaft dar. In dem Codierungsanzeigeschritt 72 blendet die Anzeigeeinheit 34 die Codierung 39 als Legende 90 ein. Insbesondere stellt die Anzeigeeinheit 34 Anzeigeobjekte 20, 22, 24, 26, 28, 30, 32, welche gefundene Fremdobjekte und/oder ein Grundmaterial des Untersuchungsobjekts 14 repräsentieren, durch geometrische Formen wie Punkte oder längliche Punkte, insbesondere Linien, dar. Die Codierung 39, welche die Messzusatzinformation wiedergibt, wird durch Einfärbung der Formen realisiert. Es kann auch vorteilhaft sein, nur einen Teil der Form eines der Anzeigeobjekte 20, 22, 24, 26, 28, 30, 32 einzufärben, wenn die Detektion im Vordergrund steht. Ein nicht eingefärbter Teil, beispielsweise ein äußerer Kreis, des Anzeigeobjekts 20, 22, 24, 26, 28, 30, 32 steht für das detektierte Fremdobjekt. Ein eingefärbter Teil des Anzeigeobjekts 20, 22, 24, 26, 28, 30, 32, beispielsweise ein Punkt in einer Mitte des Anzeigeobjekts 20, 22, 24, 26, 28, 30, 32, steht für die Codierung 39. Alternativ oder zusätzlich zu Farben kann die Codierung 39 auch mittels Symbolen und/oder Text realisiert werden. Um den Farben eine Bedeutung zu geben, wird die Legende 90 eingeblendet. Die Legende 90 kann automatisch und/oder über das als Taste ausgebildete Bedienelement 62 eingeblendet werden. Zusätzlich oder alternativ werden weitere Anzeigeobjekte 20, 22, 24, 26, 28, 30, 32 wie Symbole und/oder Text zu der aktuell erfassten Teilregion des Untersuchungsobjekts 14 eingeblendet, insbesondere um die Bedienung intuitiver zu gestalten. Dadurch kann der Benutzer vorteilhaft die Bedeutung der Farben bei der Verwendung lernen, insbesondere ohne auf die Legende 90 zurückzugreifen. Sind nur bestimmte Klassen von Fremdobjekten von Interesse, so ist es möglich, die Fremdobjekte uncodiert darzustellen und/oder die Fremdobjekte auszublenden. Optional unterstützt eine akustische Ausgabe von erkannten Objekten die optische Codierung 39 oder ersetzt diese, indem ein akustisches Signal abhängig von der Materialeigenschaft codiert wird, beispielsweise mittels einer Frequenz, einer Laustärke oder einer Ansage der Materialeigenschaft, insbesondere der Materialart, in Klartext.

Figur 4 zeigt beispielhaft einen Wechsel der Darstellungsform 36, 38 einer Anzeige der Anzeigeeinheit 34. Beispielhaft ist eine der Darstellungsformen 36, zu einer Unterscheidung "Objekttiefe" genannt, zu einer Auswertung einer Tiefe der Materialeigenschaft ausgebildet. Beispielhaft ist eine der Darstellungsformen 38, zu einer Unterscheidung "Bohrtiefe" genannt, zu einer Auswertung einer maximal erlaubten Bohrtiefe ausgebildet. In zumindest einem Verfahrensschritt des Verfahrens 10 durchläuft ein den Sensorbereich 40 des Materialuntersuchungsgeräts 12 darstellendes weiteres Anzeigeobjekt 42 einen Darstellungswechsel in Abhängigkeit von der ermittelten Materialeigenschaft. Insbesondere wird der Sensorbereich 40 bei einem freien Bohrweg anders, insbesondere andersfarbig, dargestellt, als wenn eine durch das Anzeigeobjekt 30' dargestellte Anomalie in dem Bohrweg detektiert wird. Optional wird, insbesondere zusätzlich, eine Warnmeldung 92 auf der Anzeigeeinheit 34 ausgegeben. Ein Umschalten zwischen den Darstellungsformen 36, 38 wird beispielsweise über ein Einstellungsmenü oder eine Direkttaste durchgeführt. In der Darstellungsform 36 "Objekttiefe" befindet sich die horizontale Tiefenreferenz 44 des aktuellen erfassten Fremdobjekts direkt an einer Objektoberkante des Fremdobjekts, welche der angezeigten Oberfläche 16 des Untersuchungsobjekts 14 zugewandt ist, gibt somit die Tiefe des Fremdobjekts an. Ein Marker der Tiefenreferenz 44 hebt auf einem als Tiefenskala ausgebildeten weiteren Anzeigeobjekt 82 die Tiefe hervor und unterstützt damit das Ablesen. Der Marker sowie die Tiefenreferenz 44 sind farblich an das aktuell erfasste Fremdobjekt angepasst, um die Zugehörigkeit zu unterstreichen. Eine Fokusmarkierung sowie zwei, hier gestrichelt dargestellte, Grenzmarkierungen, stellen den Sensorbereich 40 dar. Die Grenzmarkierungen sind insbesondere an den Außenkanten des Materialuntersuchungsgeräts 12 angeordnet. Die Fokusmarkierung und die Grenzmarkierungen werden rot dargestellt, sobald sich ein Fremdobjekt im Sensorbereich 40, insbesondere zwischen den gestrichelten Grenzmarkierungen, befindet, ansonsten grün. In der Darstellungsform 38 "Bohrtiefe" befindet sich die Tiefenreferenz 44 in einem definierten Abstand, insbesondere einer Sicherheitsmarge, zu den für das Bohren relevanten Fremdobjekten. Das für die Tiefenreferenz 44 herangezogene Fremdobjekt kann das aktuell erfasste Fremdobjekt sein oder es werden mehrere Fremdobjekte herangezogen, wobei das Objekt mit der geringsten Tiefe maßgebend ist. Sind mehrere Objekte maßgeblich für die Tiefenreferenz 44, wird der Marker und die Tiefenlinie in einer neutralen Farbe dargestellt. Um zu kennzeichnen, dass aktuell die Darstellungsform 38 "Bohrtiefe" gewählt ist, wird auf der Tiefenreferenz 44, insbesondere innerhalb des Sensorbereichs 40, ein Bohrer angezeigt. In einem Bereich von der angezeigten Oberfläche 16 bis zur Tiefenreferenz 44 werden die Grenzmarkierungen und/oder die Fokusmarkierung grün dargestellt, insbesondere zur Kenntlichmachung, dass Bohren möglich ist. In einem Bereich von der Tiefenreferenz 44 bis zu einem von der angezeigten Oberfläche 16 abgewandten Ende des angezeigten Untersuchungsobjekts 14 werden die Grenzmarkierungen und/oder die Fokusmarkierung rot dargestellt, insbesondere zur Warnung vor einem Fremdobjekt. Ist Bohren nicht möglich, da das Fremdobjekt zu flach liegt, so wird ein Icon angezeigt, dass "Bohren nicht möglich" symbolisiert. In beiden Darstellungsformen 36, 38 warnt optional eine akustische Ausgabe zusätzlich vor Fremdobjekten. Optional stellt der Benutzer eine gewünschte Bohrtiefe ein. Die Anzeigeeinheit 34 zeigt optional nur Fremdobjekte an, die ein Bohren in die gewünschte Bohrtiefe behindern.

Figur 5 zeigt eine weitere Darstellungsform 96, mit welcher die Anzeigeeinheit 34 die Materialeigenschaft darstellt. Insbesondere umfasst die weitere Darstellungsform 98 als weiteres Anzeigeobjekt eine Ausrichtungshilfe 94, hier in Form eines Fadenkreuzes, zu einer lateralen Ausrichtung des Materialuntersuchungsgeräts 12 relativ zu der Oberfläche 16. Die weitere Darstellungsform 96 kann alternativ oder zusätzlich zu den Darstellungsformen 36, 38 von der Anzeigeeinheit 34 angezeigt werden.

Figur 6 zeigt eine zusätzliche Darstellungsform 98, mit welcher die Anzeigeeinheit 34 die Materialeigenschaft mittels eines als Kurvenverlauf 100 ausgebildeten Anzeigeobjekts 33 darstellt. Insbesondere ist die Messzusatzinformation in einer durch den Kurvenverlauf 100 begrenzten Fläche dargestellt oder als Darstellung des Kurvenverlaufs 100, beispielsweise als Farbe oder als Muster des Kurvenverlaufs 100. Der Kurvenverlauf 100 ist beispielsweise ein Maß für die Wahrscheinlichkeit, dass sich an der entsprechenden Stelle ein Fremdobjekt befindet oder ein Maß dafür, wie feucht das Untersuchungsobjekt 14 ist. Stehen Messzusatzinformationen zur Verfügung, so werden optional weitere Kurvenverläufe dargestellt. Die Kurvenverläufe 100 können sich überlagern, insbesondere mit derselben oder einer Doppelskala dargestellt werden, beispielsweise mit Tiefe eines Fremdobjekts, Laufzeit des Messsignals, Signalstärke des Messsignals und/oder Wahrscheinlichkeit für ein Fremdobjekt. Alternativ werden mehrere Kurvenverläufe 100 mit je einem eigenen Koordinatensystem dargestellt, wobei die Koordinatensysteme parallel zu einer Skala, insbesondere einer Ordinate, der Koordinatensysteme verschoben dargestellt werden. Alternativ wird der Kurvenverlauf 100 oder die Fläche zwischen Kurvenverlauf 100 und Abszissenachse des zum Kurvenverlauf 100 gehörenden Koordinatensystems entsprechend der Messzusatzinformation eingefärbt oder anderweitig grafisch verändert. Beispielsweise gibt der Kurvenverlauf 100 an sich eine Wahrscheinlichkeit für das Vorhandensein eines Fremdobjekts oder eine Signalstärke des erfassten Messsignals an. Beispielsweise gibt die Farbe des Kurvenverlaufs 100 oder der Fläche zwischen Kurvenverlauf 100 und Abszissenachse Informationen über die Materialart des Fremdobjekts. Vorzugsweise ist die Anzeige von dem Benutzer parametrisierbar, d.h. dass der dargestellte Wertebereich 48 für die Messzusatzinformation anpassbar ist. Insbesondere ist der dargestellte Wertebereich 48 unabhängig davon, wie viele Informationen dargestellt werden, insbesondere unabhängig davon, ob eine oder mehrere Kurvenverläufe 100 mit oder ohne Einfärbung dargestellt werden, anpassbar. Beispielsweise ist ein minimaler Wert und/oder ein maximaler Wert einer Skala des Koordinatensystems oder der Messzusatzinformation anpassbar. Mit dem minimalen Wert wird eingestellt, wie klein bzw. schwach das kleinste auffindbare Fremdobjekt sein kann. Insbesondere ist mit einer Erhöhung des minimalen Werts ein unerwünschter Signalanteil in dem Messsignal, insbesondere ein Rauschen und/oder ein Clutter, ausblendbar. Mit dem maximalen Wert ist eine maximal dargestellte Signalstärke des Messsignals einstellbar, insbesondere sodass auch bei schwachen Messsignalen eine Fläche der Anzeigeeinheit 34 vorteilhaft ausgenutzt wird. Die Anpassung des dargestellten Wertebereichs 48 kann vom Benutzer manuell vorgenommen werden, abhängig von anderen Benutzereinstellungen wie z.B. Grundmaterial automatisiert oder in Abhängigkeit von einer von der Sensoreinheit 65 ermittelten Referenz vollständig automatisch durchgeführt werden.

## Patentansprüche

1. Verfahren zum Betrieb eines, insbesondere handhaltbaren,
Materialuntersuchungsgeräts, bei welchem ein Messsignal in ein Untersuchungsobjekt (14) ausgesandt wird, bei welchem eine Position des Materialuntersuchungsgeräts relativ zu einer Oberfläche (16) des Untersuchungsobjekts (14) erfasst wird, um eine Materialeigenschaft einer hinter der Oberfläche (16) verborgenen Region (18) des Untersuchungsobjekts (14) ortsaufgelöst und/oder richtungsaufgelöst zu ermitteln, und bei dem die Materialeigenschaft als zumindest ein digitales Anzeigeobjekt (20, 22, 24, 26, 28, 30, 32) mittels einer physischen Anzeigeeinheit (34) dargestellt wird, wobei in zumindest einem Verfahrensschritt dasselbe Anzeigeobjekt (22, 24, 26, 28, 30, 32) zusätzlich zu der Materialeigenschaft eine Messzusatzinformation, insbesondere mittels farblicher Codierung (39), darstellt, **dadurch gekennzeichnet, dass** in zumindest einem Verfahrensschritt ein einen Sensorbereich (40) des Materialuntersuchungsgeräts darstellendes weiteres Anzeigeobjekt (42) einen Darstellungswechsel in Abhängigkeit von der ermittelten Materialeigenschaft durchläuft, wobei sich die Darstellung des Sensorbereichs (40) zusammen mit dem Materialuntersuchungsgerät und/oder mit einer Ausrichtung einer Sensoreinheit (65) des Materialuntersuchungsgeräts relativ zu der Darstellung des Untersuchungsobjekt (14) mitbewegt.

2. Verfahren nach Anspruch 1, **dadurch gekennzeichnet, dass** die Materialeigenschaft und Messzusatzinformation in zumindest zwei Verfahrensschritten in jeweils einer verschiedenen Darstellungsform (36, 38) ausgegeben werden.

3. Verfahren nach Anspruch 1 oder 2, **dadurch gekennzeichnet, dass** in zumindest einem Verfahrensschritt eine aktuelle Darstellungsform (36, 38) des Anzeigeobjekts (32) mittels der Messzusatzinformation und/oder einer weiteren Messzusatzinformation kenntlich gemacht wird.

4. Verfahren nach einem der vorhergehenden Ansprüche, **dadurch gekennzeichnet, dass** in zumindest einem Verfahrensschritt die Messzusatzinformation eine Materialart codiert.

5. Verfahren nach einem der vorhergehenden Ansprüche, **dadurch gekennzeichnet, dass** in zumindest einem Verfahrensschritt eine Codierung (39) der Messzusatzinformation geändert wird.

6. Verfahren nach einem der vorhergehenden Ansprüche, **dadurch gekennzeichnet, dass** in zumindest einem Verfahrensschritt die Messzusatzinformation eine Tiefenreferenz (44) in Abhängigkeit von der ermittelten Materialeigenschaft darstellt.

7. Verfahren nach einem der vorhergehenden Ansprüche, **dadurch gekennzeichnet, dass** in zumindest einem Verfahrensschritt eine Codierung (39) der Messzusatzinformation eingeblendet wird.

8. Verfahren nach einem der vorhergehenden Ansprüche, **dadurch gekennzeichnet, dass** in zumindest einem Verfahrensschritt ein dargestellter Wertebereich (46, 47, 48) für die Materialeigenschaft und/oder die Messzusatzinformation angepasst wird.

9. Materialuntersuchungsgerät mit einer Steuereinheit (50) und einer Anzeigeeinheit (34), insbesondere Farbdisplay, zu einer Durchführung eines Verfahrens nach einem der vorhergehenden Ansprüche.

## Claims

1. Method for operating a material investigation device, in particular a handheld material investigation device, in which a measurement signal is sent into an object under investigation (14), in which a position of the material investigation device relative to a surface (16) of the object under investigation (14) is detected in order to determine a material property of a region (18), hidden behind the surface (16), of the object under investigation (14) in a spatially resolved and/or direction-resolved manner, and in which the material property is presented at least one digital display object (20, 22, 24, 26, 28, 30, 32) by means of a physical display unit (34), wherein, in at least one method step, the same display object (22, 24, 26, 28, 30, 32) presents measurement additional information in addition to the material property, in particular by means of colour coding (39), **characterized in that**, in at least one method step, a further display object (42) presenting a sensor region (40) of the material investigation device undergoes a presentation change on the basis of the determined material property, wherein the presentation of the sensor region (40) moves together with the material investigation device and/or with an orientation of a sensor unit (65) of the material investigation device relative to the presentation of the object under investigation (14).

2. Method according to Claim 1, **characterized in that** the material property and additional measurement information are output in at least two method steps in each case in a different presentation form (36, 38).

3. Method according to Claim 1 or 2, **characterized in that**, in at least one method step, a current presentation form (36, 38) of the display object (32) is indicated by means of the additional measurement information and/or further additional measurement information.

4. Method according to one of the preceding claims, **characterized in that**, in at least one method step, the additional measurement information codes a material type.

5. Method according to one of the preceding claims, **characterized in that**, in at least one method step, a coding (39) of the additional measurement information is changed.

6. Method according to one of the preceding claims, **characterized in that**, in at least one method step, the additional measurement information represents a depth reference (44) on the basis of the determined material property.

7. Method according to one of the preceding claims, **characterized in that**, in at least one method step, a coding (39) of the additional measurement information is displayed.

8. Method according to one of the preceding claims, **characterized in that**, in at least one method step, a presented value range (46, 47, 48) for the material property and/or the additional measurement information is adapted.

9. Material investigation device having a control unit (50) and a display unit (34), in particular a colour display, for carrying out a method according to one of the preceding claims.

## Revendications

1. Procédé de fonctionnement d'un appareil d'examen de matériau, notamment portatif, dans lequel un signal de mesure est émis dans un objet d'examen (14), dans lequel une position de l'appareil d'examen de matériau par rapport à une surface (16) de l'objet d'examen (14) est acquise afin de déterminer une propriété du matériau d'une région (18) de l'objet d'examen (14), dissimulée derrière la surface (16) de manière résolue spatialement et/ou en direction, et dans lequel la propriété du matériau est représentée sous la forme d'au moins un objet d'affichage numérique (20, 22, 24, 26, 28, 30, 32) au moyen d'une unité d'affichage physique (34), dans lequel, dans au moins une étape du procédé, le même objet d'affichage (22, 24, 26, 28, 30, 32) représente, en plus de la propriété du matériau, une information de mesure supplémentaire, en particulier par un codage couleur (39), **caractérisé en ce que**, dans au moins une étape du procédé, un autre objet d'affichage (42), représentant une région de capteur (40) de l'appareil d'examen de matériau, subit une modification d'affichage en fonction de la propriété déterminée du matériau, la représentation de la région de capteur (40) se déplaçant en même temps que la représentation de l'objet d'examen (14) conjointement avec l'appareil d'examen de matériau et/ou avec une orientation d'une unité de capteur (65) de l'appareil d'examen de matériau.

2. Procédé selon la revendication 1, **caractérisé en ce que** la propriété du matériau et des informations de mesure supplémentaires sont délivrées en au moins deux étapes de procédé sous une forme de représentation (36, 38) respective différente.

3. Procédé selon la revendication 1 ou 2, **caractérisé en ce que**, lors d'au moins une étape du procédé, une forme de représentation (36, 38) actuelle de l'objet d'affichage (32) est identifiée au moyen de l'information de mesure supplémentaire et/ou d'une autre information de mesure supplémentaire.

4. Procédé selon l'une quelconque des revendications précédentes, **caractérisé en ce que**, lors d'au moins une étape du procédé, l'information de mesure supplémentaire code un type de matériau.

5. Procédé selon l'une quelconque des revendications précédentes, **caractérisé en ce que**, lors d'au moins une étape du procédé, un codage (39) de l'information de mesure supplémentaire est modifié.

6. Procédé selon l'une quelconque des revendications précédentes, **caractérisé en ce que** l'information de mesure supplémentaire représente, lors d'au moins une étape du procédé, une référence de profondeur (44) en fonction de la propriété déterminée du matériau.

7. Procédé selon l'une quelconque des revendications précédentes, **caractérisé en ce que**, lors d'au moins une étape du procédé, un codage (39) de l'information de mesure supplémentaire est superposé.

8. Procédé selon l'une quelconque des revendications précédentes, **caractérisé en ce que**, lors d'au moins une étape du procédé, une plage de valeurs (46, 47, 48) représentées est adaptée pour la propriété du matériau et/ou l'information de mesure supplémentaire.

9. Appareil d'examen de matériau doté d'une unité de commande (50) et d'une unité d'affichage (34), en particulier d'un affichage couleur, pour la mise en œuvre d'un procédé selon l'une quelconque des revendications précédentes.
